# EUROPEAN PATENT APPLICATION

(11) **EP 1 164 785 A2**
(43) Date of publication of application: **19.12.2001**
(21) Application number: 01305032.3
(22) Date of filing: 08.06.2001
(51) Int. Cl.: H04N 5/222

(54) **Apparatus using framestore demultiplexing**

(30) Priority: 15.06.2000 GB 0014671
(71) Applicant: Seos Displays Limited, Burgess Hill, West Sussex RH15 9UE (GB)
(72) Inventor: Blackham, Geoffrey Howard, Keymer, West Sussex, BN6 8DR (GB); Macpherson, Ian Murdoch, Steyning, West Sussex, BN44 3LF (GB)
(74) Representative: Jones, Graham Henry

(57) **Abstract**

Apparatus comprising framestore demultiplexing means (32) for creating a specific area of interest which has a higher image update or frame rate than a surrounding area (Figure 7). The apparatus may be used in simulators such as flight simulators, air traffic control simulators, and driving simulators.

## Description

This invention relates to apparatus using framestore demultiplexing. The apparatus may be used in display apparatus, which display apparatus may itself be used in simulators such for example as flight simulators, traffic control simulators and driving simulators.

Display systems are known which utilise head slaved tracker means for a user's head, and in which a projected image is projected onto a spherical screen. A single image or two images may be slaved around inside a dome with the advantage that only one or two image generator channels are required to cover the field of view of the user. The known display systems have the following disadvantages.
- A steering system which is employed in the visual display systems has to respond very quickly to head movement (low latency) .
- The steering system must have a high acceleration and velocity in order to match the rate of movement of the user's head.
- The high resolution field of view is quite small and the eyes of the user can see all around into a low resolution background image, since the high resolution field of view is not eye tracked.
- There is no imagery outside a typical 170° x 160° low resolution background image, but the field of view of a human user is larger and is around 200° wide, so that the user receives an impression of moving down a dark tunnel.
- The amount of light able to be sent through the optics in the known display systems is limited.

It is an aim of the present invention to obviate or reduce the above mentioned problems.

Accordingly, in one non-limiting embodiment of the present invention there is provided apparatus comprising framestore demultiplexing means for creating a specific area of interest which has a higher image update or frame rate than a surrounding area.

The apparatus may include tracker means for use with the framestore demultiplexing means. The tracker means may be a head slaved tracker means. The head slaved tracker means may provide a full update rate directly ahead of the user's gaze. The tracker means may alternatively be for tracking the specific area of interest.

The apparatus may include a high speed video switcher for use with the framestore demultiplexing means in order to create the specific area of interest.

The apparatus may include a video switch that selects data at sub-frame level from image sources that may update at different but synchronous rates.

The present invention also extends to display apparatus when including the apparatus comprising the framestore demultiplexing means.

The display apparatus may be large area display apparatus.

The invention still further provides a simulator when including the display apparatus. The simulator may be a flight simulator, an air traffic control simulator, a driving simulator, or any other suitable and appropriate desired simulator.

The display apparatus may utilise a large array tiled projection system which achieves a very high resolution throughout the field of view of the user. For example, the large array tiled projection system may comprise 60 separate high resolution displays. The large array tiled projection system gives a large number of channels which provides very high resolution imagery everywhere in the field of view of the user, approaching or exceeding eye limiting resolution. This is essential in certain training tasks, for example spotting aircraft orientation and type at realistic distant in an air traffic control simulator.

The number of channels in the display apparatus cannot easily be driven with a relatively low cost graphics computer. In view of this, the apparatus of the present invention may be configured to take a lesser quantity of images, for example 20, and spread the images out over a larger number of channels of display, for example 60 channels of display. This is done by interleaving images in time so that, for example, the graphics computer may output 60 new images per second on each of the 20 images, with different views on alternate frames. High speed, real time image processing electronic means that merges high resolution and low resolution imagery may then be instructed to freeze/unfreeze the appropriate channel, which provides two discrete images, at 30Hz each from a single 60Hz source. This can be extended 4 x 15Hz images, or 8 x 7.5Hz images etc from a single channel. In this example, head tracking may be employed so that the full update rate is directly ahead of the gaze of the user, surrounded by a 30Hz zone, then 15Hz outside of that, and so on. Since the low update rate is in the periphery of the user's gaze, the low update rate is not distracting.

Embodiments of the invention will now be described solely by way of example and with reference to the accompanying drawings in which:
Figure 1 shows the imagery obtained from a known head slaved area of interest display apparatus;
Figure 2 shows a multiple channel multiple liquid crystal device tiled back projection sphere;
Figures 3a, 3b and 3c illustrate the operation of the apparatus of the present invention;
Figures 4, 5 and 6 show zoned areas and differences in update rate represented by the degree of darkness in the various areas;
Figure 7 illustrates display apparatus of the present invention;
Figure 8 illustrates how specific areas of interest at one frame rate with background images at a different frame rate are able to be composited together; and
Figure 9 shows display apparatus using a head slaved area of interest tracker means with the area of interest being at a higher frame rate than the display area surrounding the area of interest.

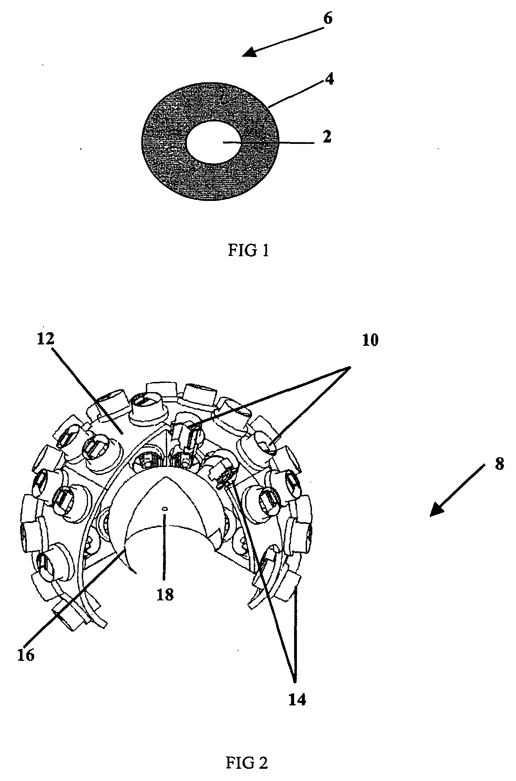

Referring to Figure 1, there is shown the imagery obtained from a known head slaved area of interest display system. The display system slaves two images around inside a dome. A single image may alternatively be slaved around inside the dome. The benefit of the known display system is that the display system only requires one or two image generator channels to cover the field of view of the user. As can be seen from Figure 1, the high resolution field of view 2 is quite small. More specifically, the high resolution field of view 2 gives a high resolution background image which is 40° wide x 30° tall. There is a low resolution background image 4 which is 170° wide x 160° tall. There is no imagery in the remaining field of view as indicated by the arrow 6. Because the human field of view is larger than 200° wide, there is an impression of moving down a dark tunnel. Because the high resolution field of view 2 is quite small, the eyes of the user can see all around into the low resolution background image 4. The steering mechanism has to respond very quickly to head movement, and the steering mechanism must have a high acceleration and velocity to match the movement rates of the user's head. Still further, the amount of light able to be sent through the optics used in the known display system is limited.

Referring now to Figure 2, there is shown a 60 channel multiple liquid crystal display tiled back projection spherical display apparatus 8. The display apparatus 8 comprises projectors 10 mounted on a support dome 12. The projectors 10 are housed in projector housings 14. Inside the display apparatus 8 is a rear projection screen 16. A design eyepoint 18 is also shown.

The sphere 8 may operate with more or less than 60 channels. The large number of channels guarantees that high display resolution is available wherever the user looks. The resolution will ultimately be eye limiting, so that the display apparatus is as resolute as the human eye.

A main problem with a 60 channel display system, is the type of computer required to drive 60 channels of imagery. At today's cost, a 30 pipe Silicon Graphics Onyx image generator (which can produce 60 images of 1280 x 1024) would cost more than £15 million, and so this solution is not commercially feasible. A solution would be to use low cost personal computer based image generators, one per channel. This may be a feasible solution in the future when the low cost personal computer based image generators improve in quality, but today's personal computer based image generators do not approach the performance of the above mentioned Onyx type of image generator.

The present invention utilises the realisation that high quality image generators, such for example as the above mentioned Onyx image generator, requires a way of putting a useful amount of high resolution imagery where needed, and a lower quality information elsewhere in the field of view of the user. By utilising tracker means, for example head tracker means, it is possible to utilise the fact that the images outside the human field of view are not required since the user cannot see them. It is possible to use the information that the human visual response biases the eye's highest resolution in a small area in the middle of the field of view. With a perfect eye tracking system, a display could be utilised covering only this small area, for example up to 10°, with high resolution imagery, but this is difficult to do and typically results in an artefact of appearing to view the image through a drinking straw. The use of head tracker means is preferred since it enables the coverage of a much larger area with high resolution imagery, so that the eyes can roam around and still see high resolution wthout such an artefact.

In the present invention, a certain amount of channels from a high performance image generator are used in order to provide a high resolution, full update rate (typically 60Hz) area which is head slaved. Outside of this high resolution, high update rate area, there is a medium update area (for example 30Hz), and outside of this is low update rate imagery (for example 15Hz). By using a framestore on each display channel, the image generator is able to be controlled to interleave different channel imagery on the same video output. This video output is sent to multiple display channels, which are asked to freeze/unfreeze in order to let the relevant image through to the visual display.

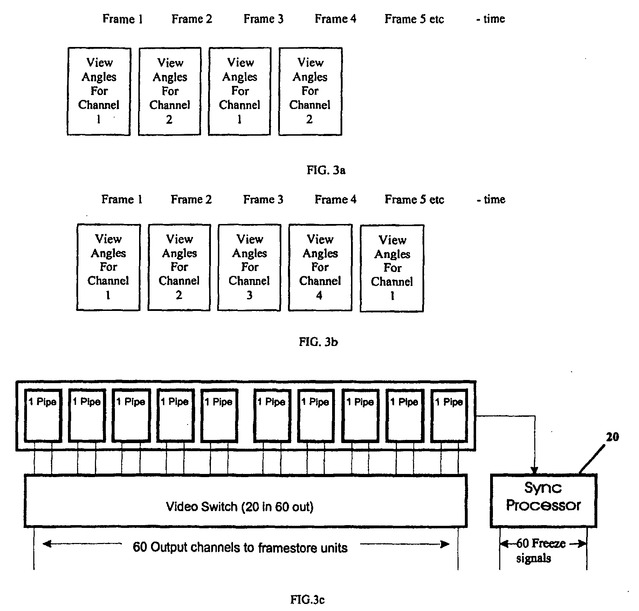

In an example of the invention with reference to Figures 3a, 3b and 3c, ten pipes of a high quality image generator can be taken, with each pipe being able to generate 2 x 1280 x 1024 images at 60Hz. Head tracker means feeds steering information to a real-time application running on the high quality image generator, which contains a software application which knows where the display channels are relative to the eye. This software application then controls a video switcher, which can switch any input channel to any output channel in real-time.

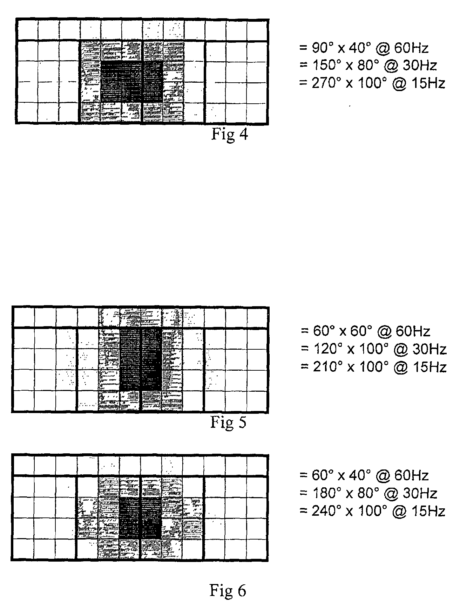

Six channels running at 60Hz covering the area straight ahead of the user's gaze are required. The software application configures the video switcher accordingly. The six channels are shown as the darkest zone in Figure 4.

The next zone that is required is the zone surrounding the darkest zone as shown in Figure 4. This next medium update-rate zone comprises 14 channels which can be allowed to work at 30Hz. To do this, the software application is required to interleave two channel's display angles from each associated image generator channel. In this way, the temporal frame interleave arrangement shown at the top of Figure 3 is achieved.

By way of illustration, Figure 3a depicts how one image generator channel can interleave a 60Hz input to provide two 30Hz outputs using a framestore demultiplexer. The video switcher is used to feed the source image to both channel 1 and channel 2, and to send a synchronisation signal from a synchronisation processor 20 as shown in Figure 3c. This freezes the framestore of channel 2 on frame 1, and unfreezes the framestore on channel 2, then a freeze on frame 2, a freeze on the framestore of channel 1 and unfreeze channel 2, and so on. In this way, a single video output, running at 60Hz, is being split out into two 30Hz images. This resolution is maintained at 1280 x 1024, and simply the frame rate is dropped.

Finally, the outer zone depicted in Figure 4 with light shading, comprising 24 channels, can be allowed to display at an update rate of 15Hz. For this zone, the temporal interleave now operates as shown in Figure 3b on a one-to-four ratio, but is otherwise the same principle as for the medium update-rate zone.

Referring to Figure 3c, a 20 channel high quality image generator has 20 images, which are then sent to the video switcher, which then goes to the 60 channels of the real time image distortion electronics present on the input to the 60 projectors.

Figure 4 shows the 60 channels (one small square each) of a rear projected ultra-high resolution display system comprising 60 projected images onto a small sphere. The darkest area is at 60Hz, the next darkest is at 30Hz, the light grey is at 15Hz, and the white squares have no image. The user's gaze is tracked so that the centre of the 60Hz area is always in front. What this accomplishes is exploitation of redundant image generator update rate capability to allow the use of less image generator channels. Normally 60 image generator channels would be required to drive 60 display channels, but in the case above, only 20 are needed, which is much more affordable. Thus the novel aspects are as follows:
- Using a framestore system to implement zoned areas outside the primary view direction to have a higher number of display channels than source channels updating the respective images at a correspondingly lower rate.
- Tracking the above area with head tracker means.
- Using a high speed video switcher to implement the movement of channels.
- Grouping the 15Hz channels together such that adjacent 15Hz channels are synchronised to minimise visual artefacts causing latency.

Assuming the use of a 60 channel rear-projected ultra-high resolution display system comprising 60 projected images onto a small sphere, the apparatus could alternatively be as follows:
- An image generator with n channels.
- A high speed video switcher with n input channels, 60 output channels.
- A synchronisation processor.
- 60 real-time image framestore units attached to 60 projectors (not necessarily liquid crystal display projectors). These framestore units may also include a distortion correction function to correct for projection onto the curved surface.
- A head tracker.
- A real-time software application which takes the head. tracker input, and decides which channels are covered by zone A, B and C, and then configures the switcher and synchronisation processor accordingly.

Other zone sizes can be implemented as shown in Figures 5 and 6.

The video switcher, synchronisation processor and framestore units combine to form a real-time image processing system that processes whole frame units to interleave source channels to output channels.

The above described apparatus of the present invention addresses a lot of the existing problems with known head slaved area of interest systems. More specifically, with the apparatus of the present invention, the following advantages may be obtained:
- The high update area is much larger.
- The resolution in the surrounding zones is still very high, and only the frame rate has dropped.
- There are no expensive moving parts to move the imagery around.
- The brightness is very high since there are many projectors.
- The entire human field of view is covered by imagery.

The above mentioned rear-projected ultra-high resolution display system has only one place to view the image that is correct. This is the centre of the spherical rear-projection screen 16 as shown in Figure 2 and it is know as the design eye point 18. The above mentioned field of view is the viewable area defined as angles measured from the user's eyes. The above mentioned image generator may be a graphics super-computer which can generate multiple images of a virtual world in real time so that the user can interact with a three dimensional world, for example by flying an aircraft around that world. The head slaved area of interest referred to above may be regarded as a head tracked high fidelity region in a larger display system.

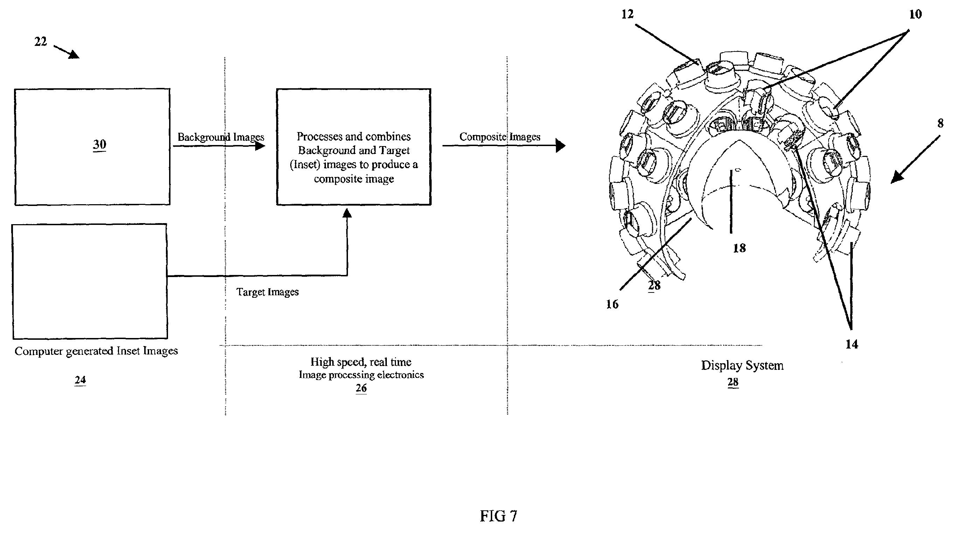

Referring now to Figure 7, there is shown apparatus 22 comprising a section 24 providing computer generated images, a section 26 providing high speed, real-time image processing electronics, and a section 28 providing a display system in the form of the sphere 8 and associated parts as shown in detail in Figure 2. The computer generated images are shown as background images 30 and specific area of interest (target) images 32. In section 26, the high speed, real-time image processing electronics is shown as apparatus 32 which processes and combines background and target (inset) images to produce a composite image. The composite image is then fed as shown to the apparatus forming the display system in section 28.

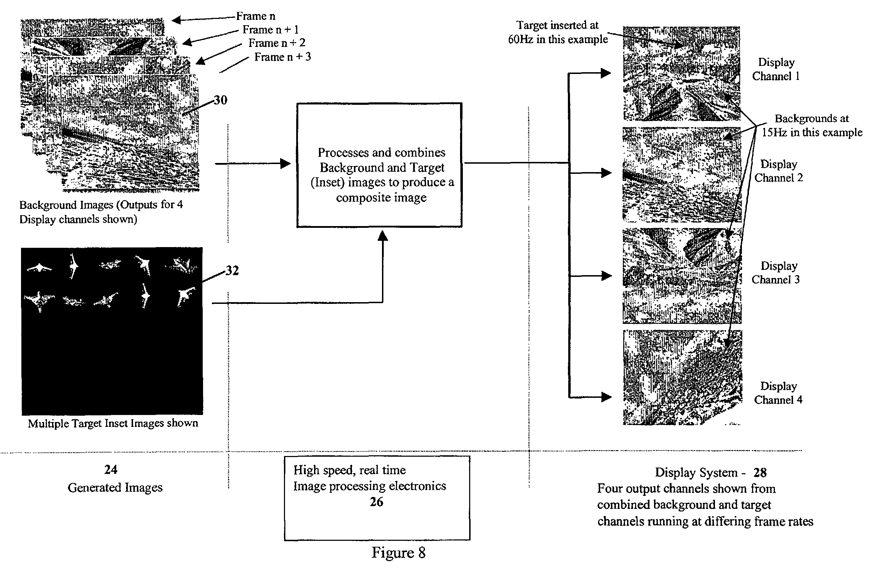

Figure 8 is similar to Figure 7 but shows a specific example as will be seen. In Figure 8, the section 28 has a display system comprising four output channels as shown from combined background, and target channels running at different frame rates. In this example, the target images are partical frame segments and the image processing electronics may insert any one or more of these into the scenes provided by the background channels. Hence at the video signal to any one display channel, there may be image data that updates at varying rates where part or parts of the image is updated at a higher rate than the remainder. The video switching function therefore operates at sub-frame level, where individual display image data is selected from sources that may update at different but synchronous rates.

The tracking of the areas of interest in this example is not achieved using a head tracking device. Instead, the simulator host computer system keeps track of the location of all such areas and supplies such tracking data to the real-time software in the image processing system. The software then provides switching data to the video switching function.

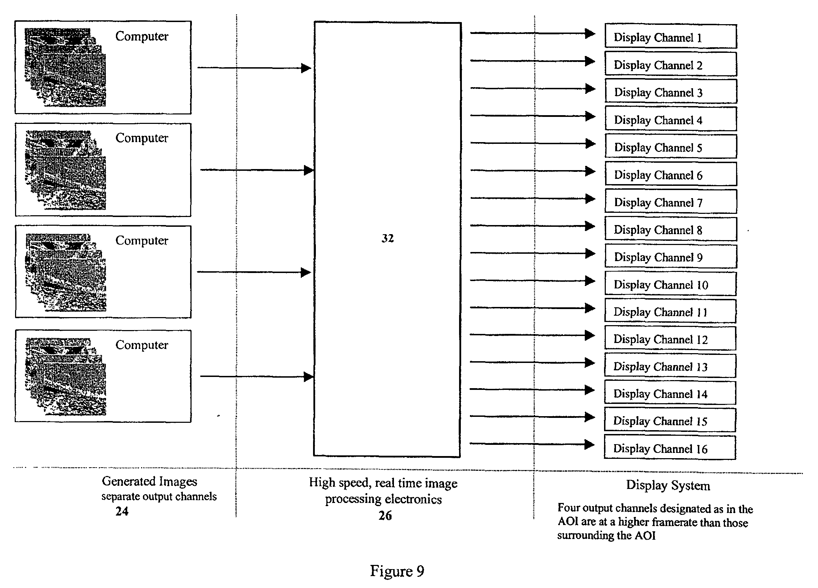

Figure 9 shows an example of apparatus of the invention which is a head slaved area of interest implementation with the area of interest being at a higher frame rate than the display area surrounding the area of interest. In the display system section 28, the channels designated as in the area of interest are at a higher frame rate than those surrounding the area of interest.

It is to be appreciated that the embodiments of the invention described above with reference to the drawings have been given by way of example only and that modifications may be effected.

## Claims

1. Apparatus comprising framestore demultiplexing means for creating a specific area of interest which has a higher image update or frame rate than a surrounding area.

2. Apparatus according to claim 1 and including tracker means for use with the framestore demultiplexing means.

3. Apparatus according to claim 2 in which the tracker means is a head slaved tracker means.

4. Apparatus according to claim 2 and in which the tracker means is for tracking the specific area of interest.

5. Apparatus according to any one of the preceding claims and including a high speed video switcher for use with the framestore demultiplexing means in order to create the specific area of interest.

6. Apparatus according to any one of the preceding claims and including a video switch that selects data at sub-frame level from image sources that may update at different but synchronous rates.

7. Display apparatus comprising apparatus according to any one of the preceding claims.

8. Display apparatus according to claim 7 and which is a large array display apparatus.

9. A simulator comprising display apparatus according to claim 7 or claim 8.

10. A simulator according to claim 9 in which the simulator is a flight simulator, an air traffic control simulator, or a driving simulator.
